Europäisches Patentamt

**(19)** European Patent Office

Office européen des brevets

**(11)** Publication number : **0 292 007 B1**

**(12)** # EUROPEAN PATENT SPECIFICATION

**(45)** Date of publication of patent specification :
13.09.95 Bulletin 95/37

**(51)** Int. Cl.⁶ : **G03C 3/00, C08F 10/02**

**(21)** Application number : **88108144.2**

**(22)** Date of filing : **20.05.88**

**(54) Packaging material for photosensitive materials.**

**(30)** Priority : **22.05.87 JP 123905/87**

**(43)** Date of publication of application :
**23.11.88 Bulletin 88/47**

**(45)** Publication of the grant of the patent :
**13.09.95 Bulletin 95/37**

**(84)** Designated Contracting States :
**DE NL**

**(56)** References cited :
GB-A- 2 117 536
US-A- 4 661 395
PATENT ABSTRACTS OF JAPAN, vol. 11, no.
194 (P-588)[2641], 23rd June 1987; & JP-A-62
18 546 (FUJI PHOTO FILM CO. LTD) 27-01-1987

**(73)** Proprietor : **FUJI PHOTO FILM CO., LTD.**
**210 Nakanuma**
**Minami-Ashigara-shi**
**Kanagawa 250-01 (JP)**

**(72)** Inventor : **Akao, Mutsuo Fuji Photo Film Co.,
Ltd.**
**No. 210 Nakanuma**
**Minami Ashigara-shi Kanagawa (JP)**

**(74)** Representative : **Grünecker, Kinkeldey,
Stockmair & Schwanhäusser Anwaltssozietät**
**Maximilianstrasse 58**
**D-80538 München (DE)**

## Description

This invention relates to a packaging material suitable for photographic photosensitive materials.

Various types of packaging materials for photosensitive materials have been put to practical use, and various properties are required according to their uses.

A packaging material for photosensitive materials must have various properties such as packaging material slitability, light-shielding, gas barrier, moistureproofness, antistatic property, rigidity, physical strength such as breaking strength, tear strength, impact puncture strength, Gelbo test strength and wear resistance, heat sealing properties such as heat seal strength, cut-seal ability, hot tack properties (hot-seal ability) and seal ability of contraries, flatness, slipping character and the like. The cut-seal ability is the slitability for fuging seal. In this sealing method, the hot plate for press is changed to a knife-shape, and melting adhesion and cutting simultaneously occur.

Generally, it is difficult that these properties are satisfied a single material. Therefore, a single layer film of a high-pressure low-density polyethylene (LDPE) kneaded with carbon black or a pigment, and a composite laminated film composed of a LDPE film and a flexible sheet such as paper, aluminum foil or cellophane, etc. have been employed. On the other hand, the inventor has investigated various packaging materials mainly for photographic photosensitive materials including using linear low density polyethylene (L-LDPE) resin (e.g. US-A-4,701,359 and Japanese Patent KOKAI No. 18547/1987)

Physical properties of the conventional laminated films were not satisfactory, and during packaging, the films were sometimes torn or punctured or the heat sealed portion of the films sometimes separated. In addition, when a large amount of a light-shielding material such as carbon black was added, the physical strength of the film was lowered. Then, the amount was set at about 3 wt. %, and the thickness of the film was more than 70 µm. As a result, the film was stiff, and the working efficiency of the packaging process was badly affected. Cost of the packaging was also expensive. While, the above conventional packaging materials using L-LDPE resin were excellent in tear strength, impact puncture strength, heat sealing properties, however, the Young's modulus was not so high. Therefore, when packaging a photographic photosensitive material having sharp edges, the packaging materials were liable to be ruptured or punctured by the sharp edges. Therefore, laminated films wherein one or more flexible sheets were laminated to a single L-LDPE resin film have also been developed in order to increase the resistance to the sharp edges. However, the laminated films are expensive.

From JP-A-6 218 546 a packaging material for photographic photosensitive materials is known, said packaging material comprising 5 to 49.5 wt % of HDPE resin, 50 to 95 wt % of L-LDPE resin, 0.1 to 10 wt % of carbon black and 0.01 to 1.0 wt % of a lubricant. With this packaging material a high heat sealability and excellent slipping characteristics are obtained.

In general, high density polyethylene (HDPE) resin has a high Young's modulus. However, it is inferior in film moldability, and liable to generate lumps. Paraffin wax used for the improvement of fluidity adheres to the pass roll to generate pressure mark troubles. Moreover, the heat sealing properties are also inferior, and it is not suitable for photosensitive materials requiring complete seal.

It is the object of the invention to provide a strong packaging material for photosensitive materials suitable for packaging photographic materials having sharp edges, which prevents the occurrence of breakage and puncture and has an excellent physical strength such as e.g. tear strength and impact puncture strength, and which does not have lumps in it.

According to the present invention this object is cbtained with a packaging material for photosensitive materials composed of a polyethylene resin film and optionally a flexible sheet laminated thereon, wherein the polyethylene film comprises 5 to 30 wt. % of a high density polyethylene resin having a melt index of more than 0.5 g/10 min and a density of higher than 0.950 g/cm$^3$, more than 50 wt. % of a linear low density polyethylene resin in which the number of carbon atoms of $\alpha$-olefin is 6 to 12, 0.1 to 20 wt. % of a light-shielding material and 0.01 to 0.9 wt. % of a phenol oxidation inhibitor. Preferred embodiments of the present invention are set forth in the dependent claims.

The present inventor has noted the high Young's modulus of HDPE resin, and after various investigations, he found that, when a particular amount of the HDPE resin having a particular melt index is used and blended with L-LDPE resin, not only the aforementioned defects of HDPE resin can be solved but also the breakage and puncture of the packaging material caused by the sharp edges of the photographic photosensitive materials do not occur, even though it is a single film.

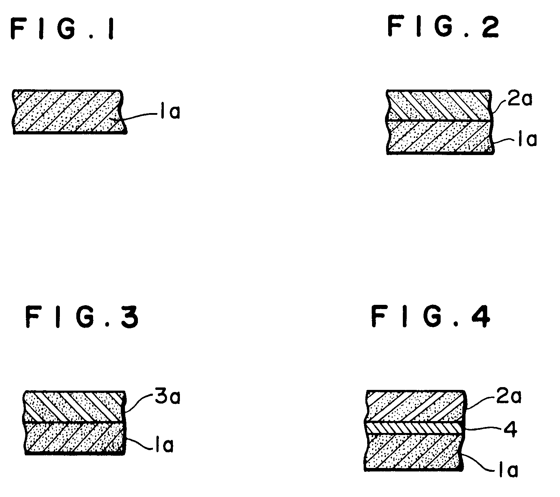

Figures 1 to 4 are partial sectional views of the packaging materials for photosensitive materials embodying the invention.

1a ... Polyethylene resin film layer
2a ... L-LDPE resin film layer

3a ... HDPE resin film layer
4 ... Adhesive layer
a ... Indicating that the layer is light-shielding

The high density polyethylene (HDPE) resin has a melt index (MI) of more than 0.5 g/10 min (ASTM D-1238) and a density of higher than 0.950 g/cm³ (ASTM D-1505). When the MI is less than 0.5 g/10 min, the film moldability is inferior. The polyethylene resin film is liable to be oriented in longitudinal direction, and it is difficult to obtain a film having a good balance in the physical strength between longitudinal direction (MD) and lateral direction (CD). Moreover, lumps increase to damage the photosensitive materials packaged. A preferable MI is in the range of 0.5 to 5 g/10 min, more preferably 0.8 to 3 g/10 min. On the other hand, when the density is lower than 0.950 g/cm³, the polyethylene resin film of high Young's modulus cannot be obtained. Preferably the density is 0.950 to 0.975 g/cm³. The content of the HDPE resin is 5 to 30 wt. %. In the case of less than 5 wt. %, the Young's modulus is low, and breakage and puncture of the films occur. While, in the case of more than 30 wt. %, not only becomes the film moldability inferior, but also lumps are generated to add pressure marks or abrasion to the photosensitive materials packaged.

The linear low density polyethylene (L-LDPE) resin is called third polyethylene resin, and it is a low cost high strength resin, having the advantages of both low, medium density polyethylene resin and high density polyethylene resin, which meets the requirements, i.e. resource conservation and energy conservation, of the times. The L-LDPE resin is a copolymer of ethylene and α-olefin, and it has a linear structure having short branches. The number of carbon atoms of the α-olefin is 6 to 12. When the number of carbon atoms is less than 6, physical strength is insufficient. The polyethylene resin film is liable to be oriented in longitudinal direction, and e.g., tear strength and impact puncture strength are insufficient.

The light-shielding material includes any material capable of shielding visible and ultraviolet light. Examples of the light-shielding material are various carbon black, graphite, iron oxide, zinc white, titanium oxide, clay, aluminum powder, aluminum paste, calcium carbonate, mica, barium sulfate, talc, cadmium pigments, red iron oxide, cobalt blue, copper-phthalocyanine pigments, monoazo and polyazo pigments and aniline black. Various carbon black, aluminum powder and aluminum paste from which volatile components are removed are preferred.

As the carbon black, oil furnace carbon black is the most preferable in terms of light-shielding character, cost and improvement of physical strength. On the other hand, since acetylene black, Ketschen carbon black and graphite have antistatic character, they are also preferred, though they are expensive. However, channel carbon black is not preferable, because it has a low pH, generates logging, it is inferior in light-shielding ability and expensive. They may be blended with the oil furnace carbon black in order to improve its character. The suitable pH of carbon black is at 5 to 9, particularly at 6 to 8. The suitable mean particle size is smaller than 200 mμ, and preferably 10 to 120 mμ, particularly 10 to 50 mμ is preferable. By using the carbon black of such pH and particle size, a packaging material having the following merits is obtained. That is, the occurrence of fogging is rare, an increase or a decrease of photosensitivity scarcely happens, the light-shielding ability is great, the lumps of carbon black and pinholes such as fish eyes hardly occur, and the physical strength and the heat sealing properties are improved.

The second preferred light-shielding material is a metal powder. Metal powder is a light-reflective light-shielding material. It imparts a preferable silver appearance, and it is excellent in moistureproofness, light-shielding, antistatic property, thermal shielding in the sunlight and gas barrier. As the metal powder, aluminum powder and its paste are preferable. The paste of aluminum powder is produced by adding mineral spirit and a small amount of a higher fatty acid such as stearic acid or oleic acid to form a paste at the production of aluminum powder according to a known method such as using a ball mill, a stamp mill or an atomizer. A polyolefin thermoplastic resin, such as e.g. various polypropylene resins, various polyethylene resins, ethylene-vinyl acetate copolymer (EVA) resin ethylene-ethyl acrylate copolymer (EEA) resin and ethylene-acrylic acid copolymer (EAA) resin, is kneaded together with this aluminum paste under heating, and volatile components mainly mineral spirit are removed by a vacuum pump. This product is used as aluminum paste compound resin or aluminum paste masterbatch resin. The aluminum paste masterbatch resin is preferable because bad smell and adverse influence upon the photographic photosensitive materials are eliminated. In order to eliminate bad smell and adverse influence upon the photographic photosensitive materials, the content of mineral spirit should be less than 0.1 wt. %. When the aluminum paste content of the coextruded double layer film is made 2 wt. % by using a masterbatch resin containing 40 wt. % of aluminum paste and 1.0 wt. % of mineral spirit, one part by weight of the masterbatch resin is blended with 19 parts by weight of the main resin. Since a part of mineral spirit evaporates during molding, the final content of the mineral spirit is less than 0.05 wt. %. The aluminum powder includes microflakes produced from aluminum foil which is crushed by a ball mill or a stamp mill, in addition to usual aluminum powder manufactured by atomization, dropping on a rotary disc or evaporation from melted aluminum. Since aluminum powder is unstable, it is stabilized by a known treatment.

The content of the light-shielding material is 0.1 to 20 wt. %. When the content is less than 0.1 wt. %, light-shielding becomes insufficient. While, when the content is more than 20 wt. %, the physical strength, particularly the tear strength and the impact puncture strength, are lowered, and the heat sealing properties become worse. The film surface is abraded to produce dust powder, and this powder adheres to the surface of photographic photosensitive materials to cause troubles.

The form of the light-shielding material prior to blending may be e.g. a powder, a paste, a wet state, a masterbatch or pellets. The method used for blending a light-shielding material may be a dry color method, a liquid color method, a masterbatch method, a color compound (color pellet) method or a dye color granule method. Among them, the masterbatch method is preferred in view of cost and a clear process.

The polyethylene resin layer may contain a thermoplastic resin in an amount of not more that 50 wt. % preferably less than 30 wt. % in addition to the HDPE resin and the L-LDPE resin. This thermoplastic resin is preferably a polyolefin resin, such as LDPE resin, and an ethylene copolymer resin including ethylene-propylene copolymer resin, EVA resin, EEA resin, EMA resin or EAA resin.

Various additives may be added to the polyethylene resin film. Examples of the additives are described below.

(1) Plasticizer;
    e.g. phthalic acid esters, glycol ester, fatty acid ester and phosphoric acid ester.

(2) Stabilizer;
    e.g. lead compounds, cadmium compunds, zinc compounds, alkaline earth metal compounds and organic tin compounds.

(3) Antistatic agent;
    e.g. cation surfactants, anion surfactants, nonion surfactants and ampholytic surfactants.

(4) Flame retardant;
    e.g. phosphoric acid esters, phosphoric acid esters halides, halides, inorganic materials and polyols containing phosphor.

(5) Filler;
    e.g. alumina, kaolin, clay, calcium carbonate, mica, talc, titanium oxide and silica.

(6) Reinforcing agent;
    e.g. glass lobing, metallic fiber, potassium titanate fiber, glass fiber, glass milled fiber and carbon fiber.

(7) Coloring agent;
    e.g. inorganic pigments (e.g. Al, $Fe_2O_3$, $TiO_2$, ZnO and Cds), organic pigments and dyes.

(8) Blowing agent;
    e.g. inorganic blowing agents (ammonium carbonate, sodium hydrogen carbonate) and organic blowing agents (nitroso compunds, azo compounds).

(9) Nucleating agent;
    e.g. organic nucleating agent (di-substituted benzylidenesorbitol compounds, etc.) and inorganic nucleating agents.

(10) Deterioration preventing agent;
    e.g. ultraviolet absorber, antioxidant, metal deactivator and peroxide decomposing agent.

(11) Lubricant;
    e.g. paraffin wax, fatty acids, silicones, stearic acid amide, metal salts of higher fatty acids, fatty acid amides, bis-fatty acid amides, alkylamines, esters and higher alcohols.

(12) Coupling agent;
    e.g. silane compounds, titanium compounds, chromium compounds and aluminum compounds.

(13) Various thermoplastic resins, rubbers

(14) Dispersibility modifier

A phenol oxidation inhibitor is added into the polyethylene resin film.

The phenol oxidation inhibitors include n-octadecyl-3-(3',5'-di-t-butyl-4'-hydroxyphenyl)propionate, 2,6-di-t-butyl-4-methylphenol, 2,6-di-t-butyl-p-cresol, 2,2'-methylenebis(4-methyl-6-t-butylphenol), 4,4'-thiobis(3-methyl-6-t-butylphenol), 4,4'-butylidenebis(3-methyl-6-t-butylphenol), stearyl-β-(3,5-di-4-butyl-4-hydroxyphenyl)propionate, 1,1,3-tris(2-methyl-4-hydroxy-5-t-butylphenyl)butane, 1,3,5-trimethyl-2,4,6-tris(3,5-di-t-butyl-4-hydroxybenzyl) benzene and tetrakis[methylene-3(3',5'-di-t-butyl-4'-hydroxyphenyl)propionate]methane. The content is 0.01 to 0.9 wt. %.

The thickness of the polyethylene resin film is generally 5 to 140 μm, preferably 15 to 80 μm.

The packaging material of the invention may be composed of the polyethylene resin film alone, or other flexible sheet(s) may be laminated thereon. The flexible sheet capable of laminating on the polyethylene resin film includes various thermoplastic resin films such as various polyethylene resin films, ethylene copolymer

EP 0 292 007 B1

resin films, polypropylene resin films, polyvinyl chloride resin films, polyvinylidene chloride resin films, polyamide resin films, polycarbonate resin films, polyester resin films and their modified resin films. Other flexible sheets such as a metallized film such as aluminum-metallized film, cellulose acetate film, cellophane, polyvinyl alcohol film, paper, metal foil such as aluminum foil and nonwoven fabric, are also suitable. Preferable flexible sheets are various papers having an areal weight of 20 to 400 g/m² such as, e.g., unbleached kraft paper, semibleached kraft paper, bleached kraft paper, neutral kraft paper, twisting paper, Clupak paper, duostress paper, white cardboard, photo base paper, pure white roll paper, simili and glassine paper, metal foils 5 to 50 μm in thickness such as aluminum foil, tin foil, zinc foil, lead foil and iron foil, aluminum-metallized paper and metallized films such as aluminum-metallized thermoplastic resin films.

Flexible sheet layers may be laminated according to a known method such as heat sealing (e.g. hot bar sealing, Verneuil's method, impulse heat sealing or supersonic heat sealing) or the method using an adhesive (e.g. wet laminating, dry laminating, hot melt laminating or extrusion laminating).

The adhesive is selected by considering both layers to be joined, and includes thermoplastic resin melting adhesives including a polyolefin adhesive, hot melting type gum adhesives and solution type adhesives. The polyolefin adhesives include a homopolymer and a copolymer of an olefin such as various polyethylenes, polypropylenes, polybutenes and ethylene-propylene copolymers and L-LDPE, a copolymer of an olefin and another monomer such as ethylene-vinyl acetate copolymer, ethylene-acrylate ester copolymer, various ionomers e.g. SURLYN® or HIMIRAN® and a graft copolymer. The solution type adhesives are divided into adhesives for wet lamination and adhesives for dry lamination. The adhesives for wet lamination are emulsion or latex. Examples of the emulsion-type adhesives are polyvinyl acetate emulsion, the emulsion of vinyl acetate-ethylene copolymer, the emulsion of vinyl acetate-acrylate ester copolymer, the emulsion of vinyl acetate-maleate ester copolymer, the emulsion of acrylic copolymer and the emulsion of ethylene-acrylic acid copolymer. Examples of the latex-type adhesives are natural rubber latex, styrene-butadiene rubber latex, acrylonitrile-butadiene rubber latex and chloroprene rubber latex. An example of the adhesives for dry lamination is polyurethane adhesive. Adhesives for hot melt lamination containing paraffin wax, microcrystalline wax, ethylene-vinyl acetate copolymer and ethylene-ethylacrylate copolymer, pressure-sensitive adhesives, temperature-sensitive adhesives and ultraviolet curing type adhesives may also be employed.

The thickness of the adhesive layer formed by extrusion laminating using a thermoplastic resin is usually 6 to 50 μm, preferably 10 to 20 μm. However, the thickness is determined based upon, for example, cost, rate of application and thickness of the whole layers, and accordingly, the thickness is not limited to the above range.

The packaging material of the invention may be used for packaging photosensitive materials such as photographic photosensitive materials, foods, medicines or chemical substances, and it is particularly suitable for packaging silver halide photographic photosensitive materials, diazo photographic photosensitive materials, photosensitive resins, self-developing type photographic photosensitive materials and other photographic materials which are degraded by a small amount of moisture or gas.

The package form may be usual, and includes a single-sheet flat bag, a double-sheet flat bag, a self-standing bag, a single-sheet gusset bag, a double-sheet gusset bag, inner lining for a moisture proof box inner lining for a light room-loading light-shielding box and a leader paper. The sealing form may also be usual, and includes heat sealing, heat cut sealing, impulse heat sealing, supersonic sealing and high frequency sealing. The methods of using an adhesive may also be utilized.

In the packaging material of the invention, the HDPE resin raises Young's modulus, and prevents the occurrence of tear and pinholes by the sharp edges of packaged materials. The L-LDPE resin improves e.g. tear strength, impact puncture strength and heat sealing properties. The packaging material of the invention is strongly resistant to breakage and puncture, even though it is thin. The packaging material is excellent in tear strength and impact puncture strength, and it is inexpensive.

Representative embodiments of the packaging material of the invention are illustrated in Figures 1 to 4.

The packaging material of Figure 1 is a single layer film consisting of the polyethylene resin film layer 1a alone.

The packaging material of Figure 2 is a coextruded multilayer film consisting of the polyethylene resin film layer 1a and a L-LDPE resin film layer 2a also containing a light-shielding material.

The packaging material of Figure 5 is another coextruded multilayer film consisting of the polyethylene resin film layer 1a and a HDPE resin film layer 3a containing a light-shielding material.

The packaging material of Figure 4 is a laminated film consisting of the polyethylene resin film layer 1a and a light-shielding L-LDPE resin film layer 2a laminated through an adhesive layer 4.

EXAMPLE

The packaging material of Example I was a single layer film 50 μm in thickness composed of 72.5 wt. %

5

of L-LDPE resin having a MI of 2.1 g/10 min and a density of 0.920 g/cm³ wherein the α-olefin was 4-methylpentene-1, 20.0 wt. % of HDPE resin having a MI of 1.1 g/10 min and a density of 0.954 g/cm³, 3.0 wt. % of oil furnace carbon black having a mean particle size of 21 mµ, 4.45 wt. % of LDPE resin and 0.05 wt. % a phenol oxidation inhibitor.

Comparative packaging material I was the same as the packaging material of Example I, except that another HDPE resin having a MI of 0.40 g/10 min and a density of 0.964 g/cm³ was used instead of the above HDPE resin.

Conventional packaging material I was a single layer film 80 µm in thickness composed of 92.5 wt. % of the same HDPE resin as Comparative packaging material I, 3.0 wt. % of the same carbon black as Example I and 4.5 wt. % of the same LDPE resin as Example I.

The above films were molded by the inflation film molding machine having a die gap of 1.0 mm at a blow-up ratio of 2:1.

Various properties of the above films were measured, and the results are shown in Table 1.

## Table 1

|  | Invention I | Comparative I | Conventional I |
|---|---|---|---|
| Tensile Strength (MD) kg/15 mm | 2.4 | 2.3 | 4.4 |
| " " (CD) kg/15 mm | 2.4 | 2.2 | 3.2 |
| Extension Ratio (MD) % | 860 | 853 | 834 |
| " " (CD) % | 1011 | 922 | 696 |
| Tear Strength (MD) g | 640 | 416 | 110 |
| " " (CD) g | 1066 | 1238 | 1568 |
| Bursting Strength kg/cm² | 1.0 | 1.0 | 1.8 |
| Impact Puncture kg · cm Strength | 11.2 | 7.2 | 6.7 |
| Lumps | B | D-E | B |
| Streaks | B | E | B |
| Curling | B | B | B |
| White Poweder | B | B | E |
| Wrinkling | B | B | D |

Evaluations in Table 1 were carried out as follows:

A very excellent    B excellent

C practical    D having a problem

E impractical

The testing methods were as follows:

Tensile Strength;                    JIS P-8133

| Extension Ratio; | JIS P-8132 |
|---|---|
| Tear Strength; | JIS P-8116 |
| Bursting Strength; | JIS P-8112 |
| Impact Puncture Strength; | JIS P-8134 |
| Lumps; | Judged by the generation of lumps in the film molded by the inflation film molding machine having a die gap of 1.0 mm at a blow-up ratio of 2:1. Evaluation was carried out by visual inspection of film appearance. |
| Streaks; | Judged by the generation of streaks in the film molded by the inflation film molding machine having a die gap of 1.0 mm at a blow-up ratio of 2:1. Evaluation was carried out by visual inspection of film appearance. |
| Curling; | A circular test piece having 10 cm in diameter was prepared from the film to be tested. The test piece was placed on a flat plate, and a 1 kg load plate was put on it. In this state, it was allowed to stand at 20°C at 65 % humidity for 24 h. Subsequently, the load plate was removed, and the test piece was allowed to stand in the same atmosphere for 24 h under no-load state. Then, the curling state was judged by visual inspection. |
| White powder; | Judged by the white powder adhered to pass roll and the film taken-up when the film was molded by the inflation film molding machine having a die gap of 1.0 mm at a blow-up ratio of 2:1. Evaluation was carried out by visual inspection of film appearance. |
| Wrinkling; | Judged by the wrinkling of the film molded by the inflation film molding machine having a die gap of 1.0 mm at a blow-up ratio of 2:1. Evaluation was carried out by visual inspection of film appearance. |

## Claims

1. A packaging material for photosensitive materials composed of a polyethylene resin film and optionally a flexible sheet laminated thereon, wherein the polyethylene film comprises 5 to 30 wt. % of a high density polyethylene resin having a melt index of more than 0.5 g/10 min and a density of higher than 0.950 g/cm$^3$, more than 50 wt. % of a linear low density polyethylene resin in which the number of carbon atoms of $\alpha$-olefin is 6 to 12, 0.1 to 20 wt. % of a light-shielding material and 0.01 to 0.9 wt. % of a phenol oxidation inhibitor.

2. The packaging material of claim 1 wherein said linear low density polyethylene resin has a melt index of 0.8 to 30 g/10 min and a density of 0.87 to 0.94, the $\alpha$-olefin copolymerized with ethylene has a number of carbon atoms of 6 to 8, and the $\alpha$-olefin content is 0.5 to 10 mol %.

3. The packaging material of claim 1 wherein the polyethylene resin film has a thickness of 15 to 80 $\mu$m.

## Patentansprüche

1. Verpackungsmaterial für lichtempfindliche Materialien, das aus einem Polyethylenharzfilm und gegebenenfalls einer darauf laminierten Weichfolie zusammengesetzt ist, worin der Polyethylenfilm 5 bis 30 Gew.-% eines Polyethylenharzes hoher Dichte mit einem Schmelzindex von mehr als 0,5 g/10 min und einer Dichte von mehr als 0,950 g/cm$^3$, mehr als 50 Gew.-% eines linearen Polyethylenharzes niederer Dichte, in welchem die Anzahl der Kohlenstoffatome von alpha-Olefin 6 bis 12 beträgt, 0,1 bis 20 Gew.-% eines lichtundurchlässigen Materials und 0,01 bis 0,9 Gew.-% eines Phenol-Oxidationsinhibitors umfaßt.

2. Verpackungsmaterial nach Anspruch 1, worin das lineare Polyethylenharz niederer Dichte einen Schmelzindex von 0,8 bis 30 g/10 min und eine Dichte von 0,87 bis 0,94 hat, das mit Ethylen copolymerisierte alpha-Olefin eine Anzahl der Kohlenstoffatome von 6 bis 8 hat, und der alpha-Olefin-Gehalt 0,5 bis 10 Mol% beträgt.

3. Verpackungsmaterial nach Anspruch 1, worin der Polyethylenharzfilm eine Dicke von 15 bis 80 μm hat.

**Revendications**

1. Matériau d'emballage pour matières photosensibles composé d'une pellicule de résine de polyéthylène et éventuellement d'une feuille flexible laminée sur celle-ci, dans lequel la pellicule de polyéthylène comprend 5 à 30 % en poids d'une résine de polyéthylène haute densité ayant un indice de fusion supérieur à 0,5 g/10 min. et une densité supérieure à 0,950 g/cm³, plus de 50 % en poids d'une résine de polyéthylène linéaire basse densité dans laquelle le nombre d'atomes de carbone d' a-oléfine est 6 à 12, 0,1 à 20 % en poids d'une matière faisant écran à la lumière, et 0,01 à 0,9 % en poids d'un inhibiteur d'oxydation phénolique.

2. Matériau d'emballage selon la revendication 1, dans lequel ladite résine de polyéthylène linéaire basse densité a un indice de fusion de 0,8 à 30 g/10 min. et une densité de 0,87 à 0,94, la α-oléfine copolymérisée avec l'éthylène a un nombre d'atomes de carbone de 6 à 8, et la teneur en α-oléfine est 0,5 à 10 % en moles.

3. Matériau d'emballage selon la revendication 1, dans lequel la pellicule de résine de polyéthylène a une épaisseur de 15 à 80 μm.

FIG.1

1a

FIG.2

2a

1a

FIG.3

3a

1a

FIG.4

2a

4

1a